(19) **Europäisches Patentamt / European Patent Office / Office européen des brevets**

(11) **EP 2 634 541 B1**

(12) **EUROPÄISCHE PATENTSCHRIFT**

(45) Veröffentlichungstag und Bekanntmachung des Hinweises auf die Patenterteilung:
**14.03.2018 Patentblatt 2018/11**

(51) Int Cl.:
***G01F 23/284*** *(2006.01)*

(21) Anmeldenummer: **13152123.9**

(22) Anmeldetag: **22.01.2013**

(54) **Verfahren zur Füllstandsmessung**

Method for measuring fill levels

Procédé de mesure de niveau de remplissage

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **01.03.2012 DE 102012101725**

(43) Veröffentlichungstag der Anmeldung:
**04.09.2013 Patentblatt 2013/36**

(73) Patentinhaber: **Sick AG**
**79183 Waldkirch/Breisgau (DE)**

(72) Erfinder:
- **Weber, Thomas**
  **77960 Seelbach (DE)**
- **Sonntag, Dennis**
  **76571 Gaggenau (DE)**
- **Schweiger, Stefan**
  **77704 Oberkirch (DE)**

(74) Vertreter: **Hehl, Ulrich**
**SICK AG**
**Intellectual Property**
**Erwin-Sick-Strasse 1**
**79183 Waldkirch (DE)**

(56) Entgegenhaltungen:
**EP-A1- 2 365 302       EP-A1- 2 418 465**
**EP-A2- 1 191 315       WO-A1-02/25227**
**DE-A1-102005 003 152   DE-A1-102006 019 191**

- **CATALDO A ET AL: "A TDR Method for Real-Time Monitoring of Liquids", IEEE TRANSACTIONS ON INSTRUMENTATION AND MEASUREMENT, IEEE SERVICE CENTER, PISCATAWAY, NJ, US, Bd. 56, Nr. 5, 1. Oktober 2007 (2007-10-01), Seiten 1616-1625, XP011192302, ISSN: 0018-9456, DOI: 10.1109/TIM.2007.903596**

EP 2 634 541 B1

**Beschreibung**

Die Erfindung betrifft ein Verfahren zur Füllstandsmessung in einem Behälter mit einem Medium und mindestens einer darüber angeordneten Störschicht, insbesondere Schaumschicht, nach dem Oberbegriff von Anspruch 1 sowie einen für dieses Verfahren ausgebildeten Sensor.

Ein bekanntes Verfahren zur Füllstandsmessung beruht darauf, ein elektromagnetisches Signal in den Behälter mit dem zu vermessenden Füllstand zu senden und das reflektierte Signal auszuwerten. Eine Möglichkeit ist, das Signal frei abzustrahlen, wie dies beim Radar geschieht. Wegen der unkontrollierten Wellenausbreitung wird häufig das Verfahren der Zeitbereichsreflektometrie (TDR, Time Domain Reflectometry) bevorzugt. Es basiert auf der Bestimmung von Laufzeiten eines elektromagnetischen Signals, um den Abstand einer Diskontinuität des Leitungswellenwiderstandes zu ermitteln. Der Unterschied zum Radar besteht darin, dass die elektromagnetischen Wellen nicht ins Freie abgestrahlt, sondern entlang eines Leiters geführt werden. Der Leiter ist als Monosonde oder Koaxialsonde ausgebildet, welche senkrecht oder schräg in den Tank eingeführt wird und möglichst dicht bis zum Boden reicht, um den vollen Messbereich abzudecken.

Bei einer TDR-Messung wird ein sehr kurzer elektrischer Sendeimpuls in den Leiter eingespeist und durchläuft ihn in Richtung des gegenüberliegenden Endes. Trifft der Impuls auf eine Störstelle, was gleichbedeutend mit einer Änderung des örtlichen Wellenwiderstands ist, wird ein Teil der Sendeenergie zum Leitungseingang zurückreflektiert. Aus der Laufzeit zwischen dem Aussenden des Sendeimpulses und dem Empfang der Reflexion lässt sich die Position der Störstelle ortsgenau errechnen. Ein wichtiges Beispiel einer Störstelle ist eine Grenzfläche, welche zwei räumliche Bereiche mit unterschiedlichen physikalischen oder chemischen Eigenschaften trennt, wie eine Grenzfläche zwischen zwei Medien.

Um den Empfangszeitpunkt genau bestimmen zu können, wird der Verlauf des Empfangssignals abgetastet und einer digitalen Auswertung zugeführt. Dabei werden beispielsweise lokale Extremstellen im Signalverlauf gesucht und deren zeitliche Lage einer Reflexion an einer Grenzfläche zugeordnet.

Schwierigkeiten entstehen, wenn mehrere Grenzflächen vorhanden sind, wie dies beispielsweise bei mehreren Medien in einem Behälter der Fall ist. Dabei kann es sich beispielsweise um Wasser handeln, das sich am Boden eines Öltanks ansammelt. Ein wichtiger Fall ist Schaumbildung an der Oberfläche einer Flüssigkeit. Hier möchte man häufig den Füllstand des eigentlichen Mediums ermitteln. Eine Reflexion an der Grenzfläche zum Schaum kann aber mit dem Messpuls des Mediums verwechselt werden oder sogar in einer Weise mit diesem Messpuls verschmelzen, dass gar kein sinnvolles Messergebnis mehr geliefert wird. Ein herkömmlicher Auswertealgorithmus, der nur für die Erkennung einzelner Reflexionssignale ausgelegt ist, kann also mit solchen Messsituationen nicht umgehen.

Selbst einer Erweiterung eines herkömmlichen Auswertealgorithmus' um eine Mehrechoauflösung von mehreren Grenzschichten steht somit die in der Praxis oft nicht gegebene Voraussetzung im Wege, dass die Trennschichten einen bestimmten Abstand aufweisen müssen, damit die aus den Trennschichten resultierenden Pulse im Echosignal einen hinreichenden Abstand voneinander haben. Noch schwieriger wird es, wenn die einzelnen Schichten der Medien nicht einmal in sich homogen sind. Beispielsweise kann bei Schaum die Dichte und damit die relative Dielektrizitätskonstante nach einer unbekannten, meist monotonen Funktion ansteigen, so dass sich zahlreiche kleine, einander überlagernde Pulse im Echosignal ergeben.

Ein möglicher Ausweg könnte darin bestehen, die Bandbreite des Sendepulses zu erhöhen. Dadurch sind Echopulse, die durch nahe beieinander liegenden Grenzschichten entstehen, eher getrennt. Gleichzeitig verschärfen sich aber auch die Anforderungen an das Elektronikdesign, etwa die Abtastrate sowie die nachfolgende Signalerfassung. Zudem nimmt bei sehr hohen Frequenzen jenseits von 10GHz die Dämpfung in einer Monosonde durch den Skin-Effekt stark zu, so dass das Signal-RauschVerhältnis unzureichend werden kann. In jedem Fall löst eine Bandbreitenerhöhung noch nicht das Problem, die an Schaum und Medium entstehenden Echos zu unterscheiden und so sicherzustellen, dass nicht der Schaumstand als Füllstand des Mediums oder ein verfälschter Füllstand des Mediums ausgegeben wird.

Ein anderer Ausweg könnte darin liegen, anstelle einer Monosonde eine Koaxialsonde zu verwenden. Dadurch kann die Resistenz gegenüber Schaum verbessert werden, denn die Echos werden hauptsächlich durch Variationen im Feldraum innerhalb des Koaxialrohrs hervorgerufen. Durch eine vorteilhafte Ausgestaltung des Koaxialrohrs mit nur kleinen Öffnungen ist es möglich, das Eindringen von Schaum in das Rohr zu minimieren. Allerdings werden so auch gegenüber einer Monosonde die Einsatzmöglichkeiten beschränkt, da sich Anteile des zu messenden Mediums im Koaxialrohr ablagern können. Dies kann die Verfügbarkeit des Sensors beeinträchtigen. In Anwendungen mit Hygieneanforderungen ist der Einsatz gar nicht möglich.

Der Ansatz, die Schaumbildung von vorneherein durch den Zusatz von chemischen Mitteln oder durch den Betrieb der Anlage mit optimierten Prozessparametern zu reduzieren, ist in den meisten Anwendungen nicht umsetzbar. Chemische Mittel beeinflussen das Prozessmedium und sind im Lebensmittelbereich ohnehin meist undenkbar. Durch optimierte Prozessparameter lässt sich das Problem mildern, gerade in der Betriebsphase beim Anfahren kann eine Schaumbildung aber auf diese Weise selten ausreichend unterdrückt werden.

Ein bisher im Stand der Technik nicht verfolgter Ansatz liegt darin, die Sonde eines üblichen TDR-Füllstandsensors von unten in den Behälter einzubauen. So wird der Abstand zwischen Prozessanschluss und Mediumsoberfläche bestimmt, und eine Trennschicht oberhalb der zu bestimmenden Mediumsoberfläche hat bei der Bestimmung der Entfernung der Mediumsoberfläche keinen Einfluss. Das ist also eine sehr einfache alternative Möglichkeit, das Messproblem bei einem Medium mit darüber angeordneten Störschichten zu lösen. Allerdings kann so auch nicht der Füllstand des Schaums selbst bestimmt werden. Auch ist die Kenntnis der relativen Dieelektrizitätskonstanten des Mediums erforderlich, weil sich der Messpuls bis zur zu vermessenden Grenzschicht in dem Medium statt wie herkömmlich in Luft und damit entsprechend verzögert ausbreitet. Schließlich ist der Einbau von unten nicht unbedingt erwünscht, weil dies bauliche Nachteile, Dichtigkeitsprobleme und eine schlechte Zugänglichkeit des Sensors mit sich ziehen kann.

Die EP 2 365 302 A1 beschreibt ein Verfahren, bei dem der Abstand zu einer Grenzfläche und die relative Dielektrizitätskonstante des die Grenzfläche erzeugenden Mediums ein erstes Mal anhand eines Übergangspulses am Übergang der Sonde in den Behälter und des Echos an der Grenzfläche und ein zweites Mal anhand eines Artefaktpulses vom Ende der Sonde bestimmt wird. Sind diese Messungen nicht zueinander konsistent, so wird auf die Anwesenheit einer weiteren Grenzschicht geschlossen und das Verfahren iterativ auf die weitere Grenzschicht angewandt, bis alle Füllstände vermessen sind. Dies erfordert genaue Informationen der beiden Referenzpulse, also des Übergangspulses vom Anfang und des Artefaktpulses vom Ende der Sonde. Um hier eine ausreichende Genauigkeit zu erzielen, werden hohe Anforderungen an die Elektronik gestellt, die zu entsprechenden Herstellkosten führen. Selbst damit lässt sich aus dem Übergangspuls einer Monosonde, die anders als eine Koaxialsonde sehr vielen Störeffekten ausgesetzt ist, nicht hinreichend genau auf den tranmittierten Anteil der Sendeenergie schließen. Zudem ist der Artefaktpuls am Ende der Sonde durch die Ausbreitung in den unterschiedlichen Medien in einer zunächst völlig undefinierten Weise verzögert und abgeschwächt und steht daher in vielen Messsituationen nicht als zuverlässige Referenz zur Verfügung. Außerdem kann bei niedrigen Füllständen auch der Artefaktpuls von Messpulsen überlagert sein, so dass die Referenz sogar verfälscht ist.

Die DE 100 51 151 A1 zeigt ein TDR-Verfahren zur Bestimmung der Positionen oberer und unterer Grenzflächen einer ersten Flüssigkeit, die auf einer zweiten Flüssigkeit eines Behälters schwimmt. Es wird aber nicht genauer erklärt, wie die entsprechenden Echos an den beiden Grenzflächen erkannt und unterschieden werden. Außerdem basiert auch hier die Auswertung auf dem Artefaktpuls, der in der DE 100 51 151 A1 als Bezugsrückführimpuls bezeichnet ist. Das hat die oben geschilderten erheblichen Nachteile.

Aus der US 6,724,197 B2 ist ein Füllstandssensor bekannt, mit dem der Füllstand des unteren von zwei aufeinander geschichteten Medien bestimmbar ist. Dazu ist aber eine besondere und aufwändige Sondenform erforderlich.

Die US 5,723,979 A offenbart einen TDR-Füllstandssensor zur Messung in Flüssigkeitsmischungen. Beschrieben wird lediglich eine Sondenform. Ein Auswertungsverfahren, erst recht eine Bestimmung der Entfernung zu mehreren Grenzschichten, ist nicht beschrieben.

In der US 6,445,192 B1 werden Zwillingspulse an doppelten Grenzflächen von einem TDR-Sensor anhand des Steigungsverhaltens der Signalform aufgetrennt. Allerdings wird nicht erklärt, wie damit der Füllstand eines unter einer Störschicht liegenden Mediums vermessen wird.

In der EP 2 154 495 A2 wird in einer u-förmigen Doppelsonde ein zweites Reflexionssignal ausgewertet. Dieses zweite Reflexionssignal hat seinen Ursprung aber nicht von einer zweiten Grenzfläche, sondern entsteht auf dem Rückweg des Signals längs der u-Form an der Unterseite derselben, einzigen Grenzfläche.

Aus der WO 02/25227 A1 ist eine verbesserte Schwellwerteinstellung für einen Radar-Pegeltransmitter bekannt, der unter Verwendung eines TDR-Verfahrens zum Messen von Füllständen mehrerer Materialien in Speicherbehältern eingesetzt wird. Dabei werden mehrere, jeweils mit einer spezifischen Materialgrenzfläche in Beziehung stehende Schwellenwerte verwendet, um die Pegel der verschiedenen Materialien zu erfassen.

In der EP 2 418 465 A1 wird eine Radar-Füllstandsmessung beschrieben, bei der zunächst eine Echoliste mit Angaben zu in der Echokurve enthaltenen Echos erstellt wird. Diese Angaben werden dann über die Zeit verfolgt ("Tracking"), um Echos von dem Füllgut, die sich über mehrere Messungen bezogen auf ihren Echoort bewegen, und von einer Störstelle zu unterscheiden, die sich stationär verhält. Zusätzlich ist ein Amplitudenbewerter vorgesehen, welcher für jedes Echo der Echoliste den Echoort ermittelt und die am Ort des Echos theoretisch zu erwartende Echoamplitude berechnet.

Die EP 1 191 315 A2 offenbart ein Verfahren zur Ermittlung der Positionen der Grenzfläche zweier unterschiedlicher Medien mit einem TDR-Prinzip. In einer Kalibrierung wird bei leerem Behälter eine Totalreflexion am elektrisch leerlaufenden Sondenende vermessen.

Es ist daher Aufgabe der Erfindung, die Füllstandsmessung in einem Behälter mit mehreren Schichten zu verbessern. Diese Schichten dürfen auch in sich inhomogen sein, wie dies bei Schaum der Fall sein kann.

Diese Aufgabe wird durch ein Verfahren zur Füllstandsmessung in einem Behälter mit einem Medium und mindestens einer darüber angeordneten Störschicht, insbesondere Schaumschicht, nach Anspruch 1 sowie einen für dieses Verfahren ausgebildeten Sensor nach Anspruch 10 gelöst. Dabei geht die Erfindung von dem Grundgedanken aus, wie bei der Zeitbereichsreflektometrie ein elektromagnetisches Signal, insbesondere einen Mikrowellenpuls, entlang einer Sonde in den Behälter auszusenden, den Signalverlauf des in dem Behälter reflektierten Signals aufzuzeichnen und in diesem Signalverlauf Messpulse zu identifizieren. Diese Messpulse werden klassifiziert, um sie dem Medium oder einer Störschicht zuzuordnen. Dazu wird ein Erwartungswert für die Amplitude des ersten Messpulses von dem Medium und für die Amplitude des zweiten Messpulses von der Störschicht berechnet. Durch Vergleich mit diesen Erwartungswerten kann die Klassifikation erfolgen, beispielsweise durch Schwellbewertung.

Das in Anspruch 1 definierte Verfahren beschreibt den Fall, dass tatsächlich mindestens eine Störschicht vorhanden ist. Gerade bei Schaum als Störschicht ist nicht unbedingt von Anfang an bekannt, inwieweit sich Schaum gebildet hat. Deshalb wird als weiterer, im Anspruch nicht erfasster Teil des Verfahrens vorzugsweise vorab der Fall abgefangen, dass sich allein das Medium in dem Behälter befindet, beispielsweise weil kein Schaum entstanden oder der Schaum bereits in sich zusammengefallen ist. Das Kriterium für diesen Fall ist ein sehr hoher erster Messpuls, da die relative dielektrische Konstante des Mediums deutlich höher ist als diejenige von Schaum. Bei einem weiteren Sonderfall, der vorzugsweise zusätzlich abgefangen wird, befindet sich nur Schaum, also nur die Störschicht in dem Behälter. Dies kann daran erkannt werden, dass die Messung einen leeren Behälter ergibt, weil der einzig signifikante Messpuls der Artefaktpuls vom Sondenende ist. Zugleich entspricht aber der anhand des Artefaktpulses gemessene Füllstand wegen der gegenüber einem leeren Behälter verzögerten Wellenausbreitung in dem Schaum einer Höhe unterhalb des Behälterbodens. Die Erfindung hat den Vorteil, dass die gewünschten Füllstände auch bei Anwesenheit einer Störschicht zuverlässig gemessen werden. So wird in einem Behälter, in dem sich neben dem Medium auch eine Störschicht und insbesondere Schaum befindet, stets gezielt die Mediumsoberfläche oder die Störschicht erfasst. Ferner ist die Erfindung zusätzlich in der Lage, die relative Permittivität oder die relative Dielektrizitätskonstante einer oder mehrerer Trennschichten zu ermitteln, auch dann, wenn parasitäre Effekte auftreten und oder die Tankgeometrie Verluste durch Fehlanpassung verursacht. Das Verfahren funktioniert bei Einsatz einer Monosonde, die im Gegensatz zu einer Koaxialsonde wesentlich mehr unter anderem von der Behältergeometrie abhängigen Einflüssen ausgesetzt ist. Die Messdynamik und Ansprechzeit des Systems wird nicht merklich eingeschränkt, und eine Hardwareänderung des Sensors ist in der Regel nicht notwendig.

Die Erwartungswerte werden bevorzugt aus einer bekannten relativen Dielektrizitätskonstanten $\varepsilon_r$ des Mediums, einer mindestens angenommenen relativen Dielektrizitätskonstanten $\varepsilon_{r\min}$ der Störschicht und/oder einer Referenzamplitude $A_{end}$ eines bei leerem Behälter am Sondenende entstehenden Artefaktpulses berechnet. Dies vereinfacht die Berechnung erheblich. Ohne Rückgriff auf den Artefaktpuls wäre es erforderlich, Informationen über die Tankgeometrie durch Parametrierung des Sensors vorzugeben, da sehr unterschiedliche Behälter und Tanks vorzufinden sind. Entsprechende Einstellungsschritte bedeuten für den Inbetriebnahmevorgang zusätzlichen Aufwand und Fehlerquellen. Dies betrifft eine Monosonde in wesentlich stärkerem Maße als eine Koaxialsonde, die durch ihren Außenleiter das Ausbreitungsverhalten weitgehend selbst bestimmt. Durch Bezugnahme der Erwartungswerte auf den Artefaktpuls können zahlreiche behälter- und geräteabhängige Faktoren und damit die zugehörigen Einstellungsschritte und Berechnungen entfallen. Gemeint ist hier nicht der Artefaktpuls am Ende eines jeden Signalverlaufs einer Messung, der sich mit den Messbedingungen ständig verändert und häufig nicht genau genug erfassbar ist, sondern derjenige von dynamischen Messbedingungen unabhängige Artefaktpuls, der bei identischem Gerät und Sendepuls in dem leeren Behälter entstehen würde.

Der Erwartungswert $A_{2E}$ für die Amplitude $A_2$ des ersten Messpulses wird bevorzugt nach der Rechenvorschrift

$$A_{2E} = \left( \frac{A_{end}^{\,2} - A_1^{\,2}}{A_{end}} \right) \cdot \left( \frac{A_{end} - A_1 - \sqrt{\varepsilon_r}\,(A_{end} + A_1)}{A_{end} - A_1 + \sqrt{\varepsilon_r}\,(A_{end} + A_1)} \right)$$

und/oder der Erwartungswert $A_{1E}$ für die Amplitude $A_1$ des zweiten Messpulses nach der Rechenvorschrift

$$A_{1E} = A_{end} \frac{1 - \sqrt{\varepsilon_{r\min}}}{1 + \sqrt{\varepsilon_{r\min}}}$$

bestimmt. Diese Rechenvorschriften bieten einfache, geschlossene Ausdrücke für die Erwartungswerte. Hierbei soll auf eine auf den ersten Blick verwirrende Terminologie und Wahl der Indizes hingewiesen werden. Denn der erste Messpuls korrespondiert mit $A_2$, der zweite Messpuls mit $A_1$. Das liegt daran, dass der an dem Medium entstehende Messpuls in den weitaus meisten Fällen der interessantere Messwert ist und deshalb als der erste Messpuls bezeichnet sein soll. Zugleich entsteht dieser erste Messpuls rein messtechnisch erst weiter hinten, so dass für die Berechnungen eine abweichende Indizierung vorteilhafter ist.

Die relative Dielektrizitätskonstante $\varepsilon_r$ des Mediums, die mindestens angenommene relative Dielektrizitätskonstante $\varepsilon_{r\min}$ der Störschicht und/oder die Referenzamplitude $A_{end}$ wird bevorzugt vorgegeben, berechnet oder in einer Kalibrationsmessung bestimmt. Die relative Dielektrizitätskonstante $\varepsilon_r$ des Mediums kann bereits vorab feststehen, weil bekannt ist, welches Medium vermessen werden soll. Alternativ wird eine Kalibrationsmessung bei einem bekannten Füllstand vorgenommen, oder es wird ein grober Anfangswert vorgegeben, etwa ein Wert von 80 für Wasser, und wenn dann im weiteren Betrieb eine Situation erkannt wird, in der keine Störschicht vorhanden ist, wird dieser Anfangswert nachgeführt. Die mindestens angenommene relative Dielektrizitätskonstante $\varepsilon_{min}$ der Störschicht soll primär signifikant höher sein als diejenige von Luft, also beispielsweise im Bereich von 1 bis 10, oder sie beträgt einen Bruchteil derjenigen des Mediums, beispielsweise 1 % - 30 % davon. Etwas Genaueres als eine Untergrenze ist weder möglich noch erforderlich, da die Konsistenz des Schaums zunächst unbekannt ist, der Wert aber auch nur dazu dient, den zweiten Messpuls vom Rauschen zu unterscheiden. Der Artefaktpuls dient dazu, Abhängigkeiten von der Behältergeometrie und der Signalverzerrung durch das Gerät zu kompensieren. Dazu kann die Referenzamplitude in Kenntnis der Behältergeometrie und des Geräts berechnet oder durch Simulation bestimmt oder alternativ in einer Kalibrationsmessung bestimmt werden. Eine Kalibration bei leerem Behälter wird ohnehin oft aus anderen Gründen vorgenommen, so dass dann kein merklicher Zusatzaufwand entsteht.

Die mittlere Ausbreitungsgeschwindigkeit $\overline{c}_1$ des elektromagnetischen Signals in der Störschicht aus der Re-

$$\overline{c}_1 = c_0\left(\frac{A_{end} + A_1}{A_{end} - A_1}\right)$$

ferenzamplitude $A_{end}$ und der Amplitude $A_1$ des zweiten Messpulses wird bevorzugt zu

bestimmt und der Füllstand des Mediums um die entsprechend durch $\overline{c}_1$ gegenüber der Vakuumlichtgeschwindigkeit $c_0$ verzögerte Laufzeit des Signals in der Störschicht korrigiert. So wird eine Verzerrung der Laufzeiten und damit der gemessenen Füllstände durch die Störschicht zuverlässig ausgeglichen.

Zur Behandlung überlagerter Pulse wird bevorzugt zunächst dem Maximalwert des Signalverlaufs in einem Zeitfenster eine Amplitude $A_1$, $A_2$ zugeordnet und ein um eine halbe Pulsweite früherer Wert des Signalverlauf auf eine signifikante Abweichung von Null geprüft und, wenn dies der Fall ist, dieser frühere Wert als zusätzlicher Amplitudenwert $A_1$ eines Überlagerungspulses angenommen und, wenn dies nicht der Fall ist, der Maximalwert als einzige Amplitude $A_1$, $A_2$ des Pulses behandelt. Dadurch ist mit einem sehr einfachen, aber überraschend zuverlässigen Verfahren eine Trennung sich überlagernder Pulse bei dünnen Störschichten möglich.

Die Amplituden $A_1$, $A_2$ werden bevorzugt anhand einer füllstandsabhängigen Amplitudenkennlinie reskaliert. Die nicht reskalierten Amplituden sind nämlich sowohl im Nahbereich hoher Füllstände als auch im weiteren Messbereich verzerrt. Eine Ursache sind Superpositionseffekte, die nicht durch das Auftreten mehrerer Trennschichten verursacht werden, zum Beispiel in der Nähe des Sondenanfangs oder des Sondenendes. So bilden sich im Nahbereich Mehrfachreflexionen, die mit dem ersten Reflex verschmelzen und so die Amplitude erhöhen. Ähnlich kann sich der Artefaktpuls am Sondenende mit einem Messpuls bei niedrigem Füllstand überlagern. Zudem können weiter unten an der Sonde Signalverluste beispielsweise aufgrund des Skineffekts auftreten, die durch eine Amplitudenkennlinie ebenfalls kompensierbar sind.

Vorzugsweise wird vorab eine Übergangsreferenzamplitude eines Übergangspulses am Sondenanfang gespeichert und durch Vergleich einer Übergangsamplitude des Signalverlaufs mit der Übergangsreferenzamplitude der Einfluss einer Dampfphase im oberen Bereich des Behälters erkannt und/oder kompensiert wird. Eine derartige Dampfphase wirkt im Grund wie eine weitere Störschicht und verringert damit die Ausbreitungsgeschwindigkeit. Die entsprechende Verzerrung der Laufzeit und damit der Füllstände kann kompensiert werden, nachdem der Einfluss der Dampfphase und insbesondere deren effektive relative Dielektrizitätskonstante geschätzt wurde.

Wenn ein weiterer Messpuls durch eine Belagsbildung an der Sonde entsteht, so kann vorzugsweise der Einfluss der Belagsbildung daran erkannt und/oder kompensiert werden, dass der Belag wie eine scheinbare Störschicht behandelt wird. So bleibt die Messung trotz einer Belagsbildung zuverlässig und genau, oder es wird zumindest eine entsprechende Wartungsmeldung ausgegeben.

Die Erfindung wird nachstehend auch hinsichtlich weiterer Vorteile und Merkmale unter Bezugnahme auf die beigefügte Zeichnung anhand von Ausführungsbeispielen erläutert. Die Figuren der Zeichnung zeigen in:

Fig. 1      eine schematische Querschnittsdarstellung eines Füllstandssensors nach dem Stand der Technik in einem Behälter;

Fig. 2      ein schematisches Blockdiagramm eines Sensorkopfes des Füllstandssensors gemäß Figur 1;

Fig. 3      ein beispielhafter schematischer Signalverlauf eines Echosignals einer Füllstandsmessung zur Illustration diverser Variablen;

Fig. 4      eine beispielhafte Darstellung der relativen Permittivität in Abhängigkeit von der Amplitude des Reflexionspulses;

Fig. 5a      ein beispielhafter Signalverlauf im Bereich eines verschmolzenen Pulses;

Fig. 5b   eine Darstellung gemäß Figur 5a zur Erläuterung einer Maximumsverschiebung;

Fig. 5c   eine Darstellung gemäß Fig. 5a zur Erläuterung eines Bereichs, in dem die Verschmelzung mit einem weiteren Puls erkannt werden kann;

Fig. 6a   ein beispielhafter Signalverlauf mit zwei gut separierbaren Messpulsen;

Fig. 6b   ein beispielhafter Signalverlauf mit zwei einander überlagernden Messpulsen;

Fig. 7   eine Vergleichsdarstellung einer Vielzahl erfindungsgemäß bestimmten Füllstandswerten gegenüber dem tatsächlichen Füllstand und einer herkömmlichen Füllstandsmessung; und

Fig. 8   eine beispielhafte Amplitudenkennlinie zur Kompensation von Nichtlinearitäten im Bereich hoher Füllstände.

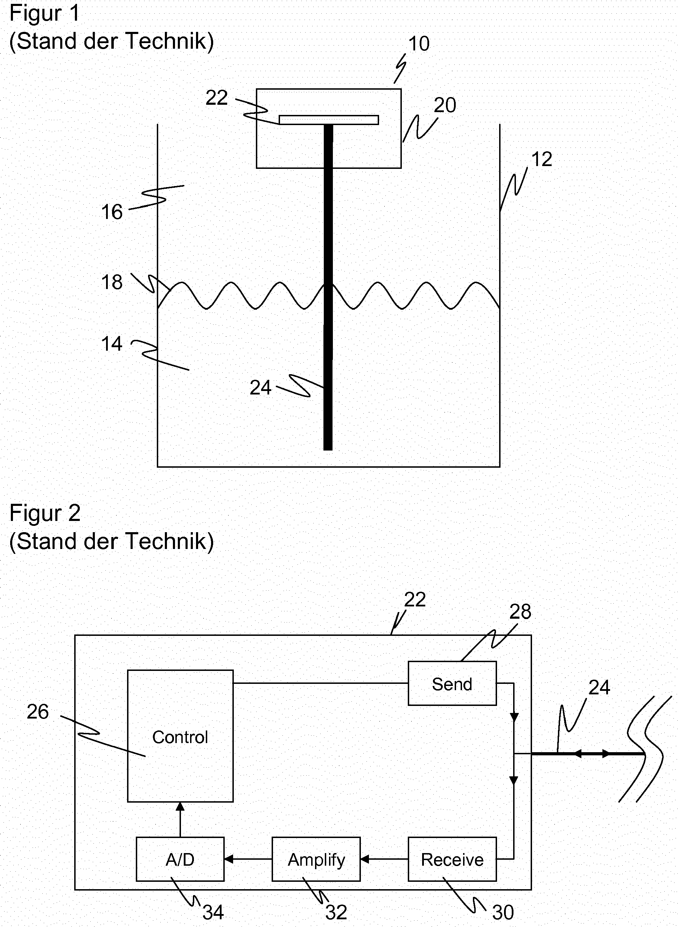

Figur 1 zeigt schematisch einen TDR-Sensor 10 nach dem Stand der Technik, der als Füllstandssensor in einem Tank oder Behälter 12 mit einem Medium oder einer Flüssigkeit 14 angebracht ist. Die Flüssigkeit 14 bildet gegenüber der Luft 16 eine Grenzfläche 18. Der Sensor 10 ist dafür ausgebildet, die Entfernung der Grenzfläche 18 zu ermitteln und daraus aus seiner bekannten Anbringungslage den Füllstand und bei Bedarf anhand der Geometrie des Behälters 12 auch die Menge der Flüssigkeit 14 abzuleiten. Obwohl die Ausbildung des Sensors 10 als Füllstandssensor für Flüssigkeiten ein sehr wichtiges Einsatzfeld ist, kann der Sensor 10 prinzipiell auch für andere Medien eingesetzt werden. Dabei ist insbesondere an Schüttgut oder Granulate zu denken.

Der Sensor 10 weist einen Sensorkopf 20 mit einer Steuerung 22 auf, die vorzugsweise auf einer gemeinsamen Platine untergebracht ist. Alternativ sind mehrere über Stecker verbundene Leiterplatten oder Flexprintträger denkbar. An die Steuerung 22 ist eine Sonde 24 angeschlossen, die hier als offene Monosonde ausgebildet ist und so unter anderem den Vorteil hat, dass sie für Anwendungen im Hygienebereich leicht gereinigt werden kann.

Die in dem Sensorkopf 20 vorgesehene Steuerung 22 beziehungsweise ihre Platine ist in Figur 2 in einem Blockschaltbild dargestellt. Die eigentliche Steuer- und Auswertungseinheit 26 ist auf einem digitalen Baustein implementiert, beispielsweise ein Mikroprozessor, ASIC, FPGA oder ein ähnlicher digitaler Logikbaustein sowie eine Kombination mehrerer derartiger Bausteine. Wie auch schon einleitend beschrieben, wird bei einer Messung ein Puls über einen Mikrowellensender 28 auf die Sonde 24 gegeben und die Laufzeit des an der Grenzfläche 18 entstehenden und in einem Mikrowellenempfänger 30 empfangenen Reflexpulses gemessen, um den Abstand der Grenzfläche 18 und damit den Füllstand in dem Behälter 12 zu ermitteln. Das Empfangssignal des Mikrowellenempfängers 30 wird für die Auswertung nach Verstärkung in einem Verstärker 32 mit einem Digital/Analogwandler 34 digitalisiert.

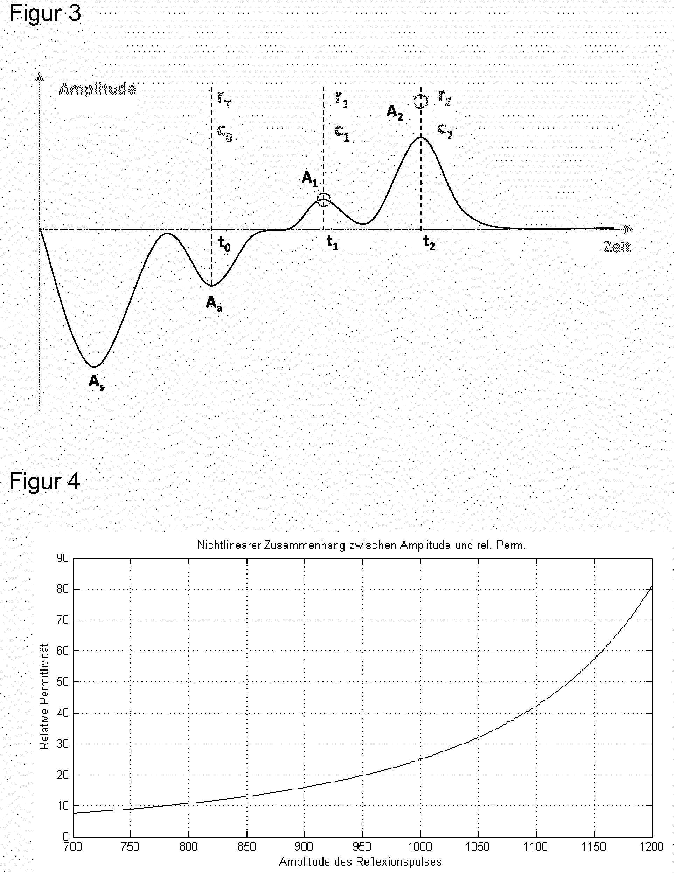

Es treten nun in der Praxis abweichend von der einfachen Situation der Figur 1 mit nur einer Grenzschicht 18 eines Mediums 14 Fälle auf, in denen sich mindestens zwei Schichten in dem Behälter 12 befinden. Dabei ist eine untere Schicht das Medium 14, darüber finden sich aber eine oder mehrere Störschichten, beispielsweise von Schaum in unterschiedlicher Konsistenz. Die relative Permittivität oder relative dielektrische Konstante $\varepsilon_r$ in der Störschicht entspricht weder Luft noch dem Medium 14. Üblicherweise werden Impulse der größten Amplitude oder steilsten Flanke für den ersten Messpuls gehalten, der am wahrscheinlichsten der gewünschten, von dem Medium 14 gebildeten Trennschicht entspricht. Erfindungsgemäß ist nun vorgesehen, die Pulse den entsprechenden Trennschichten zuzuordnen und die Position der zu messenden Trennschicht auszugeben. Dabei werden echte Störungen, beispielsweise EMV-Einflüsse, nicht als Trennschicht erkannt, und die Stör- oder Schaumschicht wird auch dann richtig identifiziert und gesondert ausgewertet, wenn sich gar kein Medium 14 in dem Behälter 12 befindet. Dies wird im Folgenden unter Bezugnahme auf die Figuren 3 bis 7 näher erläutert.

Um einen Messpuls von dem Medium 14 und die möglichen weiteren Messpulse von Störschichten unterscheiden zu können, wird ein entsprechender Erwartungswert ermittelt. Figur 3 zeigt zur Illustration einen Signalverlauf, der entsteht, wenn ein Sendepuls auf eine Monosonde oder eine Koaxialsonde mit schlechter Anpassung eingekoppelt und von zwei Trennschichten reflektiert wird. Dabei sind:

$A_s$ :   Sendeimpuls aus der Elektronik
$A_a$ :   Reflexion aufgrund des Impedanzsprungs beim Übergang in den Behälter 12
$A_1$ :   Reflexion an der ersten Trennschicht (Störschicht)
$A_2$ :   Reflexion an der zweiten Trennschicht (Medium 14)
$r_T$ :   Reflexionskoeffizient Übergang Elektronik - Behälter 12
$r_1$ :   Reflexionskoeffizient Übergang Luft - Störschicht
$r_2$ :   Reflexionskoeffizient Übergang Störschicht - Medium 14

Sollen die Reflexionen der Trennschichten nun identifiziert werden, kann eine Abschätzung der Amplituden stattfinden. Dazu beziehen sich die Amplituden $A_i$ in diesem Fall auf die Spannungsmaxima, die durch beliebige Verfahren ermittelt werden.

Alle Reflexionsimpulse haben eine durch den Reflexionskoeffizienten $r$ normierte Amplitude, welche einerseits durch das Verhältnis des zurücklaufenden Wellenpaketes mit der Amplitude $U_r$ zum hinlaufenden Wellenpaket mit der Amplitude $U_H$, andererseits durch eine Änderung des komplexen Wellenwiderstandes $\underline{Z}_i$ im jeweiligen Medium bestimmt werden kann.

$$\underline{r} = \frac{\underline{U}_r}{\underline{U}_h} = \frac{\underline{Z}_{i+1} - \underline{Z}_i}{\underline{Z}_{i+1} + \underline{Z}_i} \tag{1}$$

Die Wellenimpedanz innerhalb eines Koaxialleiters wird in der Leitungstheorie wie folgt beschrieben:

$$Z_M = \frac{Z_{w0}}{2\pi\sqrt{\varepsilon_r}} \ln\left(\frac{D}{d}\right) \tag{2}$$

Die Ausbreitung einer geführten Mikrowelle kann in einem metallischen Behälter 12 wie in (2) beschrieben betrachtet werden, wenn man die Variablen wie folgt festlegt:

$Z_M$ : Wellenimpedanz im Zylinderkondensator / Metalltank
$Z_{w0}$ : Freifeldwellenimpedanz
$D$ : Außendurchmesser des Behälters 12
$d$ : Durchmesser der Sonde 24.

Aus (1) und (2) folgt (durch (2) reell):

$$r_i = \frac{U_r}{U_h} = \frac{\sqrt{\varepsilon_{ri}} - \sqrt{\varepsilon_{ri+1}}}{\sqrt{\varepsilon_{ri}} + \sqrt{\varepsilon_{ri+1}}} = \frac{c_{i+1} - c_i}{c_{i+1} + c_i} \tag{3}$$

Die in Figur 3 gezeigten Amplituden werden nun wie folgt bestimmt:

$$A_a = A_s r_T \tag{4}$$

$$A_1 = A_s(1 + r_T)r_1(1 - r_T) \tag{5}$$

$$A_2 = A_s(1 + r_T)(1 + r_1)r_2(1 - r_1)(1 - r_T) \tag{6}$$

Es gilt, dass die Skalierung der Amplituden durch den Transmissionsfaktor

$$d_i^{out} = (1 + r_i) \tag{7}$$

für den aus Richtung Elektronik kommenden Anteil und mit

7

$$d_i^{in} = (1 - r_i) \qquad (8)$$

für den in die Elektronik zurücklaufenden Anteil bestimmt ist.

Die Amplituden können nun unter Kenntnis der relativen Permittivität des zu messenden Mediums beurteilt werden.

Um nun von der Geometrie des Behälters 12 und sonstigen Signalverlusten unabhängig zu sein, wird nun eine Referenzamplitude $A_{end}$ des Artefaktpulses vom Ende der Sonde 24 einbezogen. Diese Referenzamplitude $A_{end}$ wird beispielsweise berechnet, simuliert oder durch eine auch wiederholte Kalibrationsmessung im leeren Zustand des Behälters 12 bestimmt. Für die Referenzamplitude $A_{end}$ gilt:

$$A_{end} = A_s (1 + r_T)(1 - r_T) \qquad (9)$$

$A_{end}$ kann somit anstelle von $A_s$ und $r_T$ verwendet werden.

Somit lässt sich der n-te Puls bestimmen nach:

$$A_n = (A_{end} r_n) \cdot \prod_{i=1}^{n} (1 - r_{i-1}^2); r_0 = 0 \qquad (10)$$

Anhand der erwarteten Höhe eines jeden Pulses ist eine Identifizierung möglich. Soll geklärt werden, ob nur das zu messende Medium mit $\varepsilon_{r1}$ auftritt, so wird an den ersten Puls folgende Erwartung gestellt (mit Luft $\varepsilon_{r0} = 1$ oberhalb der ersten Trennschicht):

$$A_1 = A_{end} r_1 = A_{end} \frac{1 - \sqrt{\varepsilon_{r1}}}{1 + \sqrt{\varepsilon_{r1}}} \qquad (11)$$

Ist der in einer Messung bestimmte Puls A1 deutlich kleiner als der mithilfe von (11) berechnete, dann ist der detektierte Puls nicht die erwartete Trennschicht.

Nun ist es möglich, explizit oder implizit (je nach Anzahl der Trennschichten) die zweite Reflexion zu evaluieren. Die Reflexionsamplituden, die in die Erwartungswerte für die zweite oder darauf folgende Trennschichten eingehen, müssen mit höchstmöglicher Genauigkeit ermittelt werden.

Aus (11) folgt

$$r_1 = \frac{A_1}{A_{end}} \qquad (12)$$

beziehungsweise

$$\sqrt{\varepsilon_{r1}} = \frac{1 - r_1}{1 + r_1} = \frac{1 - \dfrac{A_1}{A_{end}}}{1 + \dfrac{A_1}{A_{end}}} = \frac{A_{end} - A_1}{A_{end} + A_1} \qquad (13)$$

$$A_2 = A_{end}(1 - r_1^2)r_2 = A_{end}\left[1 - \left(\frac{A_1}{A_{end}}\right)^2\right]r_2 \tag{14}$$

Aus (13) und (3) folgt:

$$r_2 = \frac{\sqrt{\varepsilon_{r1}} - \sqrt{\varepsilon_{r2}}}{\sqrt{\varepsilon_{r1}} + \sqrt{\varepsilon_{r2}}} = \frac{A_{end} - A_1 - \sqrt{\varepsilon_{r2}}(A_{end} + A_1)}{A_{end} - A_1 + \sqrt{\varepsilon_{r2}}(A_{end} + A_1)} \tag{15}$$

Damit ist der erwartete Wert für die zweite Amplitude nach (14) und (15)

$$A_2 = A_{end}\left[1 - \left(\frac{A_1}{A_{end}}\right)^2\right]\frac{A_{end} - A_1 - \sqrt{\varepsilon_{r2}}(A_{end} + A_1)}{A_{end} - A_1 + \sqrt{\varepsilon_{r2}}(A_{end} + A_1)} \tag{16a}$$

$$A_2 = \left(\frac{A_{end}^2 - A_1^2}{A_{end}}\right) \cdot \left(\frac{A_{end} - A_1 - \sqrt{\varepsilon_{r2}}(A_{end} + A_1)}{A_{end} - A_1 + \sqrt{\varepsilon_{r2}}(A_{end} + A_1)}\right) \tag{16b}$$

Dieses Verfahren lässt sich auch auf n Trennschichten erweitern. Die jeweiligen Terme für $r_i$ müssen entsprechend aufgelöst werden, was hier aus Gründen der Übersichtlichkeit nicht dargestellt wird. Notwendig ist dafür die Kenntnis der Amplituden der übergeordneten Trennschichten und der relativen Permittivität der gesuchten Trennschicht.
Wenn die relative Permittivität der zu messenden Trennschicht nicht bekannt ist, kann sie durch einen Kalibriervorgang bestimmt werden. Dies erfolgt einmalig vor der eigentlichen Messung, wenn sicher gestellt ist, dass sich außer dem Medium 14 nur Luft in dem Behälter 12 befindet, oder auch während des Betriebes, wenn das Verfahren selbst erkennt, dass sich derzeit über dem Medium 14 keine Störschicht befindet. Hierdurch können Parameteränderungen bezüglich der relativen Permittivität festgestellt werden. Entsprechend (11), (12) und (13) ist die relative Permittivität dann bestimmt durch:

$$\varepsilon_{rMess} = \left(\frac{A_{end} - A_{mess}}{A_{end} + A_{mess}}\right)^2 \tag{17}$$

In dieser Messanordnung tritt nur ein einziger Reflexionspuls $A_{Mess}$ von dem Medium 14 auf. Da eine anfängliche Kalibriermessung auf eine Ansprechzeit keine Rücksicht nehmen muss, können zahlreiche Wiederholungen vorgenommen und statistisch ausgewertet werden. Zu berücksichtigen ist außerdem, dass der Zusammenhang zwischen der relativen Permittivität und der Amplitude des Reflexionspulses $A_{Mess}$ nichtlinear ist. Dies ist beispielhaft in Figur 4 für eine beispielhafte Behältergeometrie gezeigt.
Befindet sich eine Störschicht in dem Behälter 12, so ist anzunehmen, dass Reflexionspulse aufgrund der verlangsamten Ausbreitungsgeschwindigkeit der elektromagnetischen Welle in dieser Störschicht elektrisch weiter entfernt erscheinen, da nicht mehr mit der gleichen Skalierung von Zeit auf Entfernung geschlossen werden kann. Aus diesem Grund sollte das Messfenster erweitert werden, und zwar so, dass einerseits die Messdynamik nicht beeinflusst wird und andererseits keine Grenzschichten übersehen werden können. Hierzu wird anhand folgender Zusammenhänge bestimmt, wie stark das Fenster vergrößert werden soll:

Die Laufzeit einer Welle ist in einem homogenen Medium bestimmt durch:

$$t_i = \frac{h_i}{c_0}\sqrt{\varepsilon_{ri}\mu_{ri}}$$ , (18)

mit:

$t_i$: Laufzeit in einer Trennschicht
$h_i$: Höhe bzw. Dicke einer Trennschicht
$c_0$: Vakuumsausbreitungsgeschwindigkeit
$\varepsilon_{ri}$: Relative Permittivität bzw. Dielektrizitätskonstante
$\mu_{ri}$: Relative Permeabilität

Es wird in dieser Beschreibung stets $\mu_{ri}$ = 1 angenommen. Möglicherweise kann diese Voraussetzung bei beschichteten Sonden, Belagsbildung oder Zweileitersonden verletzt sein, in dem Falle wäre die entsprechende relative Permeabilität mitzuführen. Beschichtungen oder Belagsbildung kann auch dazu führen, dass die effektive Permittivität im Bereich von derjenigen von Luft abweicht, weil sich dielektrisches Material im Ausbreitungsraum der Welle befindet. Dies lässt sich nicht vorab berücksichtigen, aber weiter unten wird eine Möglichkeit angegeben, den Effekt der Belagsbildung zu messen und so zu kompensieren.
Für N Trennschichten ergibt sich eine Laufzeitverzögerung von:

$$\Delta t = \sum_{i=1}^{N} \frac{h_i}{c_0}\left(\sqrt{\varepsilon_{ri}} - \sqrt{\varepsilon_{rB}}\right)$$ (19)

Dabei ist $\varepsilon_{rB}$ die relative Dielektrizitätskonstante des ohne Störschicht in dem Behälter 12 oberhalb des Mediums 14 erwarteten Stoffes, also beispielsweise von Luft mit $\varepsilon_{rB}$ =1. Um diese Laufzeitverzögerung sollte das Messfenster vergrößert werden. Sofern Speicherbedarf für den Signalverlauf und die Wiederholrate der Messwerte keine wesentliche Rolle spielt, kann man natürlich den Effekt einfach überschätzen und ein Vielfaches des sonst üblichen Messfensters verwenden.
Die verzögerte Laufzeit in der Störschicht wirkt sich aber noch viel zentraler als für die Wahl des Messfensters auch auf den eigentlichen Füllstandsmesswert aus. Je nach Dicke der Störschicht kann dies die Messgenauigkeit empfindlich beeinträchtigen, so dass sich eine Laufzeitkorrektur empfiehlt.
Wie oben als Gleichung (3) schon festgestellt, ist der Zusammenhang zwischen Reflexionskoeffizient und Ausbreitungsgeschwindigkeit gegeben durch

$$r = \frac{c_{i+1} - c_i}{c_{i+1} + c_i}$$ (3)

Gibt es nur eine Störschicht, so vereinfacht sich dies zu

$$r_1 = \frac{\overline{c}_1 - c_0}{\overline{c}_1 + c_0}$$ (21)

Gleichung (21) ist aber zugleich auch für mehrere homogene und inhomogene Störschichten gültig, wenn man annimmt, dass diese Störschichten durch eine mittlere Ausbreitungsgeschwindigkeit repräsentiert werden können. Mit Gleichung (12) gilt

$$\frac{A_1}{A_{end}} = \frac{\overline{c}_1 - c_0}{\overline{c}_1 + c_0} \quad (22)$$

und damit

$$\overline{c}_1 = c_0 \left( \frac{A_{end} + A_1}{A_{end} - A_1} \right) \quad (23)$$

Die Berechnung der Entfernung mittels Laufzeit beim Vorhandensein einer Störschicht erfolgt dann nach

$$s = c_0 t_1 + \overline{c}_1 (t_2 - t_1) \quad (24)$$

Dabei sind eventuell noch Laufzeiten in dem Sensor 10 als konstanter Versatz zu berücksichtigen. Sollen mehrere Störschichten berücksichtigt werden, die sich nicht durch eine mittlere Ausbreitungsgeschwindigkeit erfassen lassen, so gilt wegen Gleichung (10) bei der n-ten Reflexion

$$r_n = \frac{A_n}{(A_{end}) \cdot \prod\limits_{i=1}^{n-1} (1 - r_i^2)} \quad (26)$$

Die Ausbreitungsgeschwindigkeit in der jeweiligen Trennschicht wird berechnet

$$\overline{c}_n = \overline{c}_{n-1} \frac{1 + r_n}{1 - r_n} \quad (27)$$

Somit gilt allgemein:

$$\overline{c}_n = c_0 \prod\limits_{i=1}^{n} \frac{1 + r_i}{1 - r_i} \quad (28)$$

und für die zurückgelegte Strecke

$$s = \sum\limits_{i=0}^{n} \overline{c}_i (t_{i+1} - t_i) \quad (29a)$$

Ein weiteres Problem bei einer über dem Medium 14 befindlichen Störschicht ist, dass die Dicke der Störschicht nicht immer ausreicht, um überhaupt je einen separaten Messpuls für die Störschicht und das Medium 14 zu erzeugen.

Deshalb ist in einer Ausführungsform der Erfindung vorgesehen, Überlagerungspulse zu trennen und auch in solchen Situationen eine Laufzeitkompensation vorzunehmen.

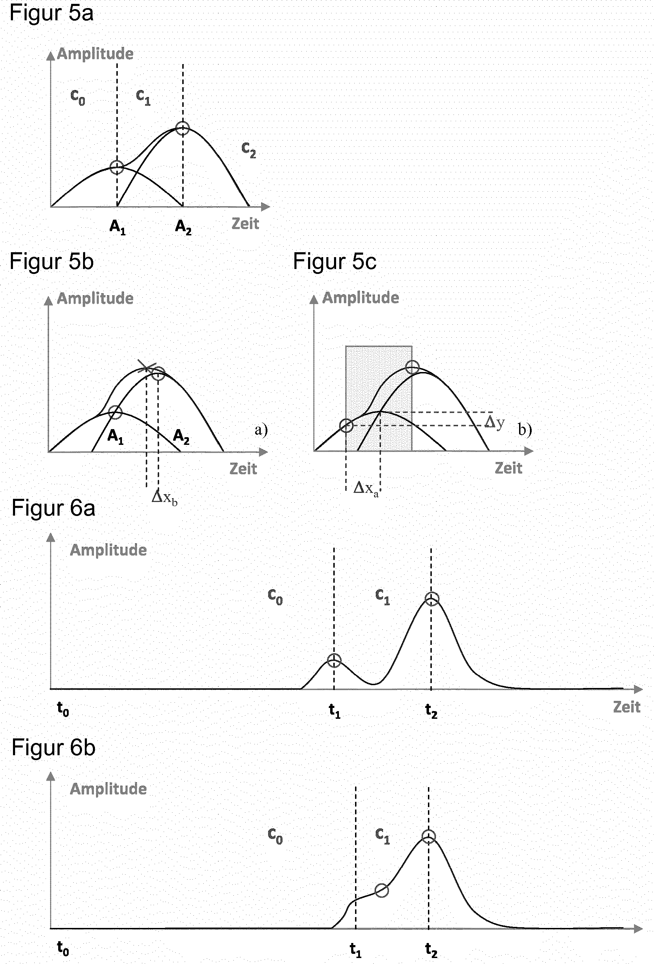

Figur 5a zeigt zunächst beispielhaft einen solchen Überlagerungspuls, bei dem der Abstand der beiden erzeugenden Pulse noch groß genug ist, um die Pulse als lokale Maxima identifizieren zu können.

Das ist in der Situation der Figur 5b nicht mehr der Fall. Um den Überlagerungspuls auszuwerten, wird vorab einmalig die Pulsbreite bestimmt. Alle Reflexionspulse sind unabhängig von der Amplitude zumindest bei hinreichender Bandbreite des Systems immer gleich breit, diese Breite ist durch die Breite des Sendepulses vorgegeben. Es wird dann zur Auftrennung des Überlagerungspulses ein in Figur 5c dargestelltes Suchfenster definiert, welches die Hälfte der Breite eines Pulses besitzt. Links des gefundenen Maximums wird der höchste Wert bestimmt, der gerade nicht mehr im Fenster liegt. Dieser legt Amplitude und Index des Reflexionspulses der übergeordneten Trennschicht fest und wird zur Laufzeitkorrektur herangezogen.

Bei dieser Näherung treten verschiedene Effekte auf, welche teilweise zu einer zu niedrigen und teilweise einer zu hohen Füllstandsangabe führen.

- Je dünner eine Trennschicht, desto geringer ist die Laufzeitverzögerung. Je geringer die Laufzeitverzögerung, desto geringer ist der Fehler durch mangelhafte Korrektur der Laufzeit. Die Laufzeitverzögerung führt zu einer zu niedrigen Füllstandsangabe.
- Die Amplitude des zweiten Messpulses an der Störschicht wird um $\Delta y$ unterschätzt, was ebenfalls zu einer zu niedrigen Füllstandsangabe führt.
- Verschmelzen zwei Pulse wie in Figur 5b, dann erscheint der Reflexionspuls des zweiten Mediums durch die Überlagerung um $\Delta x_b$ nach links verschoben, der Füllstand wird durch diesen Effekt etwas höher bestimmt als bei getrennten Pulsen.
- Die Laufzeitkorrektur beginnt um ein $\Delta x_a$ früher als notwendig, wodurch sich die Füllstandsangabe ebenfalls erhöht.

Obwohl die gegenläufigen Effekte nur qualitativ betrachtet werden und daraus noch keineswegs zwingend eine auch quantitative Kompensation folgt, zeigen die Messungen, dass diese Kompensation erstaunlich erfolgreich ist und insgesamt sehr genaue Füllstände gemessen werden können.

Auch um dies zu illustrieren, wird nun ein vollständiges Anwendungsbeispiel mit einer Klassifikation von Messpulsen in verschiedenen möglichen Messsituationen beschrieben. In dem Behälter 12 befinden sich zwei Trennschichten, wobei hier beispielhaft das Medium 14 Wasser ist und die Störschicht Schaum. Gesucht ist jeweils der Füllstand des Wassers, unabhängig davon, ob sich Schaum darüber gebildet hat und welche Schichtdicke der Schaum dann aufweist.

Dann sind fünf Zustände zu unterscheiden, und jeweils ein bestimmter zugehöriger Füllstand soll ausgegeben werden:

| | | |
|---|---|---|
| 1 | Leerer Tank | Füllstand 0 mm |
| 2 | Kein Wasser, aber Schaum | Füllstand 0 mm |
| 3 | Nur Wasser | Füllstand des Wassers |
| 4 | Wasser und viel Schaum | Füllstand des Wassers |
| 5 | Wasser und wenig Schaum | Füllstand des Wassers |

Die beiden Fälle 1 und 3 sind schon durch eine Füllstandsmessung nach dem Stand der Technik erfassbar. Zu den beiden Fällen 4 und 5 zeigen die Figuren 6a und 6b einen typischen beispielhaften Signalverlauf.

Für die Messung wird das folgende Ablaufschema verwendet:

I. Der Endreferenzpuls wird in dem leeren Behälter 12 mehrmals ermittelt, eventuell gefiltert beziehungsweise in seiner Amplitude anhand einer Kennlinie korrigiert und dann die Amplitude abgespeichert.

II. Die relative Permittivität des Mediums 14 wird bestimmt und abgespeichert. In diesem Fall ist der Wert von 80 für Wasser bekannt, alternativ kann vorab oder im Messbetrieb eine Kalibrationsmessung erfolgen, wenn sich kein Schaum in dem Behälter 12 befindet.

III. Ein Bereich der relativen Permittivität $\varepsilon_{rmin}$ des Schaums wird geschätzt und gespeichert. Auch das kann durch eine Kalibrationsmessung geschehen, wenn bekannt ist, dass sich Schaum in dem Behälter 12 befindet. Alternativ wird dieser Wert irgendwo signifikant oberhalb von 1 oder auf einen Bruchteil des Wertes des Mediums 14 gesetzt, denn Schaum als Luft-Mediums-Gemisch hat sicher nur eine kleinere relative Permittivität als das reine Medium 14.

IV. Die Erwartungswerte für die Amplituden der Messpulse werden berechnet und daraus Schwellen abgeleitet:

a) wenn der erste Puls ein Mediumspuls ist, muss er beispielsweise mindestens 90 % der Amplitude

$$A_1 = A_{end} r_1 = A_{end} \frac{1-\sqrt{80}}{1+\sqrt{80}}$$

besitzen.

b) Handelt es sich dabei um einen Schaumpuls, dann hat er eine kleinere Amplitude, die mindestens

$$A_1 = A_{end} r_1 = A_{end} \frac{1-\sqrt{\varepsilon_{r\,min}}}{1+\sqrt{\varepsilon_{r\,min}}}$$

oder einen um einen vorgegebenen Faktor skalierten Anteil davon betragen muss, wobei $\varepsilon_{r\,min}$ die Untergrenze für Schaum darstellt.

c) Ein nach dem Schaumpuls folgender Puls ist dann ein Mediumspuls, wenn er beispielsweise mindestens 90 % der Amplitude

$$A_2 = A_{end} \left[ 1 - \left( \frac{A_1}{A_{end}} \right)^2 \right] \frac{A_{end} - A_1 - \sqrt{80}(A_{end} + A_1)}{A_{end} - A_1 + \sqrt{80}(A_{end} + A_1)}$$

aufweist.

V. Der Signalverlauf beziehungsweise die Echokurve wird aufgezeichnet
VI. Die Pulse werden Anhand der Erwartungswerte aus IV. identifiziert, ggf. unter der oben beschriebenen Auftrennung von Überlagerungspulsen
VII. Die ebenfalls oben beschriebene Laufzeitkorrektur wird durchgeführt. Weiter bei Schritt V. Der Zyklus beginnt erneut.

Der einfachere Fall 4 mit Wasser und viel Schaum gemäß Figur 6a wird hierdurch problemlos erkannt und die Laufzeit wie vorgesehen geschätzt. Im Fall 5 gemäß Figur 6b, wenn nur wenig Schaum vorhanden ist und die Pulse also verschmolzen sind, ergibt sich ein gewisser Messfehler, wobei aber wie erläutert verschiedene Beiträge zu dem Messfehler zueinander gegenläufig sind und sich relativ gut kompensieren.
Um auch den Fall 2 abzudecken, muss eine besondere Leerprüfung eingeführt werden. Befindet sich im Behälter 12 kein Medium 14 und wird deswegen auch kein Reflexionspuls gefunden, wird der Endreferenzpuls gesucht, um zu bestätigen, dass die Sonde 24 unbeschadet ist. Da durch Schaum im Behälter 12 dieser Endpuls weiter hinten erscheint und unter Umständen gar nicht mehr bestimmt werden kann, muss vor der Endpulsüberprüfung abgefragt werden, ob Schaum im Behälter 12 ist. Hierzu wird Schritt V. ausgeführt und mit der Bedingung IV b) abgeglichen. Ist Schaum vorhanden, wird die Überprüfung übersprungen.

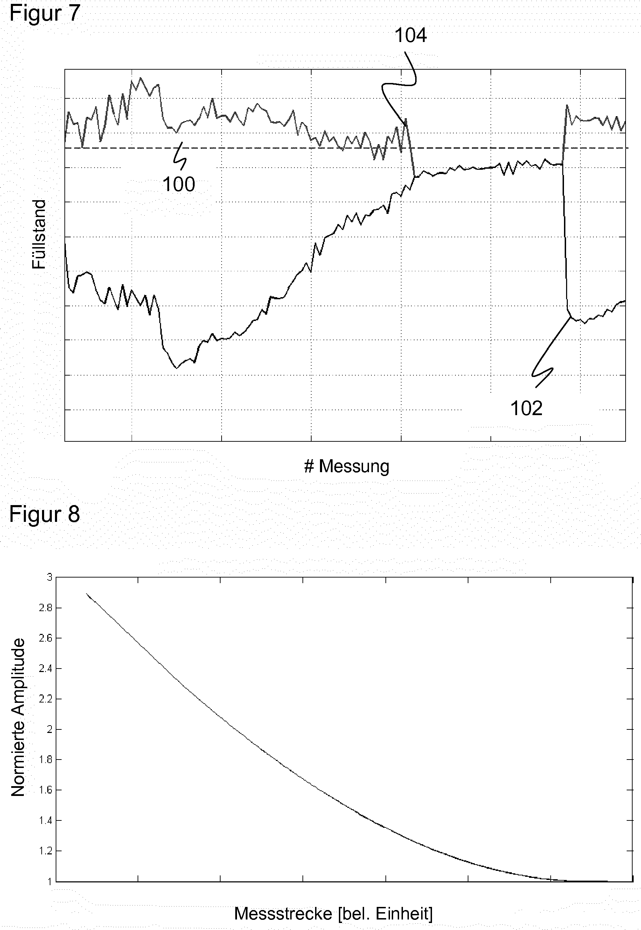

Figur 7 zeigt eine beispielhafte Testmessung. Bei dem Test war eine dünne Schaumschicht mit einer Dicke von ca. 3-4 cm über der Wasseroberfläche angeordnet. Mit dem soeben erläuterten Verfahren wurde dann über eine größere Anzahl von Messwiederholungen die Höhe des Wasserfüllstandes ausgeben.
Eine gestrichelte Linie 100 zeigt zur Referenz den tatsächlichen Wasserfüllstand. Die untere Linie 102 zeigt eine Messung mit einem herkömmlichen Sensor, der die Schaumschicht auszublenden sucht und den Abstand zu der Mediumsoberfläche ohne Laufzeitkompensation bestimmt. Wegen der Laufzeitverzögerung in der Schaumschicht wird der Messwert nach unten hin verfälscht.
Die obere Linie 104 zeigt das Ergebnis der Testmessung. Der Messwert schwankt um den Referenzwert 100 des tatsächlichen Wasserfüllstands. Dabei sind die Messfehler gegenüber der herkömmlichen Messung 102 signifikant verringert.
Befindet sich die Störschicht sehr nah am Behälterdeckel, so kann es dazu kommen, dass Amplituden durch überlagerte Mehrfachreflexionen größer erscheinen, als sie tatsächlich sind. Die Ausbreitungsgeschwindigkeit ist hier nahe der Vakuumsausbreitungsgeschwindigkeit, Mehrfachreflexionen verzögern sich also nicht so deutlich wie solche, die zwischen zwei Trennschichten entstehen.

Die Reflexion an der ersten Trennschicht hat nach (11) die Amplitude:

$$A_1 = A_s(1 + r_T)r_1(1 - r_T) = A_{end}r_1 \quad (11)$$

Der Reflexionspuls wird, wie an (1- $r_T$) zu erkennen ist, beim Hineinlaufen in die Elektronik zum Teil wieder reflektiert. Die Amplitude des reflektierten Anteils beträgt:

$$A_{M1} = A_{end} \cdot r_1 \cdot (-r_T) \cdot r_1 \quad (32)$$

Der Reflexionsfaktor des Tanks muss nun bestimmt werden (siehe (9)):

$$r_T = \sqrt{\frac{A_s - A_{end}}{A_s}} \quad (33)$$

Allgemein ist die Amplitude der k-ten Mehrfachreflexion:

$$A_{Mk} = A_{end} \cdot r_1^{k+1}(-r_T)^k \quad (34)$$

Kommt es nun zu einer Überlagerung dieser Mehrfachreflexionen, dann geht die Pulsform in die Addition als Gewichtung mit ein.

Der Sendepuls wird abschnittsweise mit einer Funktionsvorschrift beschrieben, welche die Erstreckung des Pulses in t-Richtung beschreibt, deren Amplitude aber auf 1 normiert ist. An einer Stelle $t = g$ soll die Amplitude als Null angenommen werden können. Dieser Pulsverlauf wird mit $\Gamma(t)$ bezeichnet und ist beispielsweise ein Parabelstück oder ein Stück einer Gaussfunktion, das spätestens bei g unstetig auf Null gesetzt wird.

Damit kann die die Amplitude des ersten Reflexionspulses abhängig von Pulsform und Abstand zur ersten Trennschicht folgenden Wert annehmen:

$$\hat{A}_1 = A_{end} \cdot r_1 \cdot \sum_{k=0}^{N} (-r_T)^k \cdot r_1^k \cdot \Gamma(2 \cdot k \cdot t_1) \quad (38)$$

wobei k eine Laufvariable ist. Mit (33) und (38) gilt dann:

$$\hat{A}_1 = A_{end} \cdot r_1 \cdot \sum_{k=0}^{\frac{g}{2t_1}} \left( -\sqrt{\frac{A_s - A_{end}}{A_s}} \right)^k \cdot r_1^k \cdot \Gamma(2 \cdot k \cdot t_1) \quad (39)$$

Dabei wurde noch $N = \dfrac{g}{2t_1}$ gesetzt. Dann ist

$$A_1 = \frac{\hat{A}_1}{\sum_{k=0}^{\frac{g}{2t_1}} \left( -\sqrt{\frac{A_s - A_{end}}{A_s}} \right)^k \cdot r_1^{\ k} \cdot \Gamma(2 \cdot k \cdot t_1)}$$

(38)

Neben der Berechnung der überlagerten Amplitude und Kompensation wie in (38), ist es auch möglich, die Überhöhung durch eine empirisch ermittelte, systemabhängige Ausgleichsfunktion zu kompensieren. Die Amplitudenhöhe sollte bei Vorhandensein mindestens einer Trennschicht und vorhandener Kompensation aller Welligkeiten in y-Richtung bei jeder Position in t-Richtung konstant sein. Wird nun die Amplitudenhöhe einer ersten Grenzschicht in einem Tank von ganz voll nach ganz leer oder umgekehrt variiert und aufgezeichnet, dann erhält man ein Maß für das Wachstum der Amplituden im oberen Bereich in Abhängigkeit der Position. Nach entsprechender Glättung und Normierung ergibt sich dann eine Amplitudenkennlinie wie beispielhaft in Figur 8 gezeigt. Die Kennlinie kann wahlweise als Nachschlagtabelle oder als eine durch Funktionsfit bestimmte Korrekturfunktion hinterlegt werden.

Neben Änderungen der Amplitude im Nahbereich durch Mehrfachreflexion sind auch Amplitudenabfälle im Fernbereich durch Dämpfungen, beispielsweise einen Skineffekt oder Impedanzänderungen möglich. Das kann ebenfalls durch die Amplitudenkennlinie kompensiert werden.

In einer weiteren Ausführungsform ist eine Kompensation von Dampfphasen vorgesehen. Bei einer Dampfphase wird das gasförmige Medium oberhalb der Flüssigkeitsoberfläche so stark mit Dampf gesättigt, so dass die Ausbreitungsgeschwindigkeit innerhalb des Gases deutlich von der Lichtgeschwindigkeit abweicht. Dies führt ohne deren Berücksichtigung dazu, dass die Entfernung zur Mediumsoberfläche fehlerhaft bestimmt wird, d. h. die Mediumsoberfläche wird zu tief gemessen.

Die Dampfphase ruft eine Impedanzänderung des Behälters 12 hervor, und somit ergibt sich eine Änderung zum Leerzustand ohne Dampfphase. Wurde die Leerkurve abgespeichert, so kann der Einfluss durch eine veränderte Reflexion am Übergang von Prozessanschluss in den Behälter 12 entdeckt werden. Diese Reflexion wird erfasst und kann genauso wie eine Reflexion einer Grenzschicht 18 ausgewertet werden. Eine Anforderung ist, dass die durchaus kleine Variation der Reflexion am Übergang von Prozessanschluss zum Behälter 12 nur ausgewertet werden kann, wenn folgende Reflexionen durch Medien 14 ausreichend entfernt sind. Dies ist aber in der Regel bei einem Abstand von wenigen Zentimetern gegeben. Bei einem geringeren Abstand ist die Kompensation nicht mehr möglich, was aber unkritisch ist, denn dann ist der absolute Messfehler entsprechend gering, da die absolute Laufzeit in der Dampfphase klein ist.

In einer weiteren Ausführungsform werden Effekte durch eine Belagsbildung auf der Sonde 24 kompensiert. Solche Beläge führen dazu, dass sich der Wellenwiderstand entlang der Sonde 24 ändert. Diese Änderung kann abhängig von der Größe des Belags und der Geometrie des Behälters 12 signifikant sein, so dass sich durch den Belag Reflexionen ergeben, die so hoch sind, dass sie als Füllstandpuls interpretiert werden können oder zumindest das Echosignal stark beeinflussen, wodurch sich erhöhte Messungenauigkeiten ergeben können. Zudem wird die elektromagnetische Welle, die entlang der Sonde 24 geführt wird, durch die dielektrische Eigenschaft des Belags verzögert.

Die Echosignale bei Belagsbildung haben sehr große Ähnlichkeit zu den Signalen, die bei den allgemein betrachteten Grenzschichten 18 auftreten. Somit kann das erfindungsgemäße Verfahren ebenso eingesetzt werden, um das Messverhalten bei Belagsbildung zu verbessern.

Um eine weitere denkbare Quelle von Verzerrungen der Messpulse zu unterdrücken, können auch denkbare Nichtlinearitäten des A/D-Wandlers 34 oder eines Mischers berücksichtigt werden. Dazu wird beispielsweise eine Kennlinie bestimmt, die zwischen den tatsächlichen Spannungswerten und den digitalisierten Spannungswerten vermittelt.

Bei den bisher beschriebenen Ausführungsformen ist das Sendesignal jeweils ein Puls. Alternativ kann ein Sendesignal verwendet werden, das durch Fensterung eines hochfrequenten Trägers in einem Pulskompressionsverfahren entsteht. Dabei wird in einer Vorverarbeitung eine Hüllkurve der Echokurve ermittelt und diese vereinfachte Echokurve wie der in der obigen Beschreibung verwandte Signalverlauf ausgewertet.

Eine andere Variation des Sendesignals besteht darin, nicht das Sendesignal als solches sehr kurz zu erzeugen, sondern verhältnismäßig lange Pulse mit dafür extrem kurzen Anstiegszeiten zu verwenden. Dann wird zur Laufzeitbestimmung primär die Flanke ausgewertet, d. h. die zeitliche Lage und Höhe des Sprungs. Die Amplitude der Pulse ist wieder ein Maß für die Änderung des Wellenwiderstands bzw. der relativen Dielektrizitätskonstanten, so dass die obigen Verfahren eingesetzt werden können. Durch die sehr kurzen Anstiegszeiten können jedoch zugleich einzelne Reflexionsstellen klarer und einfacher getrennt werden. Bei einer nahezu kontinuierlichen Änderung des Wellenwiderstands ergeben sich keine einzelnen Sprünge im Echo mehr, sondern ein entsprechend mehr oder wenig stetiges Echosignal.

Prinzipiell ist sogar denkbar, gar keine Pulse als Sendesignal zu verwenden. Bei einem FMCW-Verfahren etwa entstehen im interessierenden Spektrum der Zwischenfrequenz entsprechend der Entfernung zu den Reflexionsstellen mehrere, gegebenenfalls überlappende Anteile. Die Amplitude der Anteile korrespondiert mit der Intensität der Reflexion und ist damit ein Maß für den Impedanzsprung. Man kann hier das oben erläuterte Verfahren anstatt auf den Signalverlauf im Zeitbereich auf das Spektrum der Zwischenfrequenz in einem FMCW-Verfahren anwenden, um damit Füllstände von einem Medium 14 zu messen, das von mindestens einer Störschicht überlagert ist.

**Patentansprüche**

1. Verfahren zur Füllstandsmessung in einem Behälter (12) mit einem Medium (14) und mindestens einer darüber angeordneten Störschicht, insbesondere Schaumschicht, bei dem ein elektromagnetisches Signal entlang einer in dem Behälter angeordneten Sonde (24) ausgesandt und ein Signalverlauf des in dem Behälter (12) reflektierten Signals aufgezeichnet wird, in dem Signalverlauf ein der Grenzfläche (18) zu dem Medium (14) entsprechender erster Messpuls und ein der Störschicht entsprechender zweiter Messpuls identifiziert werden und aus dem ersten Messpuls der Füllstand des Mediums (14) und/oder aus dem zweiten Messpuls der Füllstand der Störschicht bestimmt wird, wobei zunächst ein Erwartungswert $A_{2E}$ der Amplitude $A_2$ des ersten Messpulses und ein Erwartungswert $A_{1E}$ der Amplitude $A_1$ des zweiten Messpulses berechnet werden und der erste Messpuls und der zweite Messpuls anhand der Erwartungswerte $A_{1E}$, $A_{2E}$ identifiziert werden,

   **dadurch gekennzeichnet,**

   **dass** die Erwartungswerte aus einer Referenzamplitude $A_{end}$ eines bei leerem Behälter am Sondenende entstehenden Artefaktpulses berechnet werden, nämlich der Erwartungswert $A_{1E}$ für die Amplitude des zweiten Messpulses $A_1$ nach der Rechenvorschrift

   $$A_{1E} = A_{end} \frac{1 - \sqrt{\varepsilon_{r\,min}}}{1 + \sqrt{\varepsilon_{r\,min}}}$$

   und der Erwartungswert $A_{2E}$ für die Amplitude $A_2$ des ersten Messpulses nach der Rechenvorschrift

   $$A_{2E} = \left( \frac{A_{end}^{\,2} - A_1^{\,2}}{A_{end}} \right) \cdot \left( \frac{A_{end} - A_1 - \sqrt{\varepsilon_r}\,(A_{end} + A_1)}{A_{end} - A_1 + \sqrt{\varepsilon_r}\,(A_{end} + A_1)} \right),$$

   wobei $\varepsilon_r$ eine bekannte relative Dielektrizitätskonstante des Mediums (14) und $\varepsilon_{min}$ eine mindestens angenommene relative Dielektrizitätskonstante der Störschicht ist.

2. Verfahren nach Anspruch 1,
   wobei die relative Dielektrizitätskonstante $\varepsilon_r$ des Mediums (14), die mindestens angenommene relative Dielektrizitätskonstante $\varepsilon_{min}$ der Störschicht und/oder die Referenzamplitude $A_{end}$ vorgegeben, berechnet oder in einer Kalibrationsmessung bestimmt wird.

3. Verfahren nach einem der vorhergehenden Ansprüche,
   wobei die mittlere Ausbreitungsgeschwindigkeit $\bar{c}_1$ des elektromagnetischen Signals in der Störschicht aus der

   $$\bar{c}_1 = c_0 \left( \frac{A_{end} + A_1}{A_{end} - A_1} \right)$$

   Referenzamplitude $A_{end}$ und der Amplitude $A_1$ des zweiten Messpulses zu bestimmt wird und der Füllstand des Mediums (14) um die entsprechend durch $\bar{c}_1$ gegenüber der Vakuumlichtgeschwindigkeit $c_0$ verzögerte Laufzeit des Signals in der Störschicht korrigiert wird.

4. Verfahren nach einem der vorhergehenden Ansprüche,
   wobei zur Behandlung überlagerter Pulse zunächst dem Maximalwert des Signalverlaufs in einem Zeitfenster eine Amplitude $A_1$, $A_2$ zugeordnet wird und ein um eine halbe Pulsweite früherer Wert des Signalverlaufs auf eine signifikante Abweichung von Null geprüft wird und, wenn dies der Fall ist, dieser frühere Wert als zusätzlicher

Amplitudenwert $A_1$ eines Überlagerungspulses angenommen wird und, wenn dies nicht der Fall ist, der Maximalwert als einzige Amplitude $A_1$, $A_2$ des Pulses behandelt wird, wobei die Pulsweite vorab bestimmt wird.

**5.** Verfahren nach einem der vorhergehenden Ansprüche,
wobei die Amplituden $A_1$, $A_2$ anhand einer füllstandsabhängigen Amplitudenkennlinie reskaliert werden.

**6.** Verfahren nach einem der vorhergehenden Ansprüche,
wobei vorab eine Übergangsreferenzamplitude eines Übergangspulses am Sondenanfang gespeichert wird und durch Vergleich einer Übergangsamplitude des Signalverlaufs mit der Übergangsreferenzamplitude der Einfluss einer Dampfphase im oberen Bereich des Behälters (12) erkannt und/oder kompensiert wird.

**7.** Verfahren nach einem der vorhergehenden Ansprüche,
wobei ein weiterer Messpuls durch eine Belagsbildung an der Sonde (24) entsteht und der Einfluss der Belagsbildung daran erkannt und/oder kompensiert wird, dass der Belag wie eine scheinbare Störschicht behandelt wird.

**8.** Sensor (10), insbesondere TDR-Füllstandssensor, mit einem Sender (28) und einem Empfänger (30) zum Aussenden und Empfangen eines elektromagnetischen Signals, insbesondere eines Mikrowellensignals sowie mit einer Steuerung (26), welche dafür ausgebildet ist, den Füllstand eines Mediums (14) und/oder einer Störschicht in einem Behälter (12) anhand der Laufzeit des Signals zu bestimmen, **dadurch gekennzeichnet,**
**dass** die Steuerung (26) dafür ausgebildet ist, den Füllstand mit einem Verfahren nach einem der vorhergehenden Ansprüche zu bestimmen.

**Claims**

**1.** A method of filling level measurement in a container (12) having a medium (14) and at least one interference layer arranged thereabove, in particular a foam layer, wherein an electromagnetic signal is transmitted along a probe (24) arranged in the container and a signal course of the signal reflected in the container (12) is recorded, a first measurement pulse corresponding to the interface (18) to the medium (14) and a second measurement pulse corresponding to the interference layer are identified in the signal course and the filling level of the medium (14) is determined from the first measurement pulse and/or filling level of the interference layer is determined from the second measurement pulse, wherein an expectation value $A_{2E}$ of the amplitude $A_2$ of the first measurement pulse and an expectation value $A_{1E}$ of the amplitude $A_1$ of the second measurement pulse are first calculated and the first measurement pulse and the second measurement pulse are identified using the expectation values $A_{1E}$, $A_{2E}$, **characterized in that** the expectation values are calculated from a reference amplitude $A_{end}$ of an artifact pulse arising at the probe end with an empty container, namely, the expectation value $A_{1E}$ for the amplitude of the second

$$A_{1E} = A_{end} \frac{1 - \sqrt{\varepsilon_{r\,min}}}{1 + \sqrt{\varepsilon_{r\,min}}}$$

measurement pulse $A_1$ using the formula and the expectation value $A_{2E}$ for the amplitude $A_2$ of the first measurement pulse using the formula

$$A_{2E} = \left( \frac{A_{end}^{\,2} - A_1^{\,2}}{A_{end}} \right) \cdot \left( \frac{A_{end} - A_1 - \sqrt{\varepsilon_r}\,(A_{end} + A_1)}{A_{end} - A_1 + \sqrt{\varepsilon_r}\,(A_{end} + A_1)} \right),$$

wherein $\varepsilon_r$ is a known relative dielectric constant of the medium (14) and $\varepsilon_{r\,min}$ is an at least assumed relative dielectric constant of the interference layer.

**2.** The method in accordance with claim 1,

wherein the relative dielectric constant $\varepsilon_r$ of the medium (14), the at least assumed relative dielectric constant $\varepsilon_{rmin}$ of the interference layer and/or the reference amplitude $A_{end}$ is predefined, calculated, or determined in a calibration measurement.

3.  A method in accordance with any of the preceding claims,
    wherein a mean propagation speed $\overline{c}_1$ of the electromagnetic signal in the interference layer is determined from the

$$\overline{c}_1 = c_0 \left( \frac{A_{end} + A_1}{A_{end} - A_1} \right)$$

reference amplitude $A_{end}$ and from the amplitude $A_1$ of the second measurement as
and the filling level of the medium (14) is corrected by the time of flight of the signal in the interference layer delayed accordingly by $\overline{c}_1$ with respect to the speed of light in vacuum $c_0$.

4.  A method in accordance with any of the preceding claims,
    wherein for treating superimposed pulses, first an amplitude $A_1$, $A_2$ is associated with the maximum value of the signal course in a time window and a value of the signal course earlier by half a pulse width is checked for a significant deviation from zero and, if this is the case, this earlier value is assumed as an additional amplitude value $A_1$ of a superimposed pulse and, if this is not the case, the maximum value is treated as the only amplitude $A_1$, $A_2$ of the pulse, wherein the pulse width is determined in advance.

5.  A method in accordance with any of the preceding claims,
    wherein the amplitudes $A_1$, $A_2$ are rescaled using an amplitude characteristic dependent on the filling level.

6.  A method in accordance with any of the preceding claims,
    wherein a transition reference amplitude of a transition pulse at the probe start is pre-stored and the influence of a vapor phase in the upper region of the container (12) is recognized and/or compensated by comparison of a transition amplitude of the signal course with the transition reference amplitude.

7.  A method in accordance with any of the preceding claims,
    wherein a further measurement pulse arises by formation of a film at the probe (24) and the influence of the film formation is recognized and/or compensated in that the film is treated like an apparent interference layer.

8.  A sensor (10), in particular a TDR level sensor, having a transmitter (28) and a receiver (30) for transmitting and receiving an electromagnetic signal, in particular a microwave signal, as well as a control (26) which is configured to determine the filling level of a medium (14) and/or of an interference layer in a container (12) with reference to the time of flight of the signal,
    **characterized in that** the control is configured to determine the fill level with a method according to one of the preceding claims.

**Revendications**

1.  Procédé de mesure du niveau de remplissage dans un récipient (12) comprenant un fluide (14) et au moins une couche perturbatrice disposée au-dessus de celui-ci, en particulier une couche de mousse, dans lequel on émet un signal électromagnétique le long d'une sonde (24) agencée dans le récipient et on enregistre une évolution du signal réfléchi dans le récipient (12), dans l'évolution du signal on identifie une première impulsion de mesure correspondant à la surface limite (18) vers le fluide (14) et une seconde impulsion de mesure correspondant à la couche perturbatrice, et à partir de la première impulsion de mesure on détermine le niveau de remplissage du fluide (14) et/ou à partir de la seconde impulsion de mesure on détermine le niveau de remplissage de la couche perturbatrice, et tout d'abord on calcule une valeur escomptée $A_{2E}$ d'amplitude $A_2$ de la première impulsion de mesure et on calcule une valeur escomptée $A_{1E}$ d'amplitude $A_1$ de la seconde impulsion de mesure, et on identifie la première impulsion de mesure et la seconde impulsion de mesure en se basant sur les valeurs escomptées $A_{1E}$, $A_{2E}$, **caractérisé en ce que**
    on calcule les valeurs escomptées à partir d'une amplitude de référence $A_{end}$ d'une impulsion d'artefact qui se produit à l'extrémité de la sonde lorsque le récipient est vide, à savoir la valeur escomptée $A_{1E}$ pour l'amplitude de la seconde impulsion de mesure $A_1$ selon la règle de calcul

$$A_{1E} = A_{end} \frac{1 - \sqrt{\varepsilon_{r\,min}}}{1 + \sqrt{\varepsilon_{r\,min}}}$$

et on calcule la valeur escomptée $A_{2E}$ pour l'amplitude $A_2$ de la première impulsion de mesure selon la règle de calcul

$$A_{2E} = \left( \frac{A_{end}^2 - A_1^2}{A_{end}} \right) \cdot \left( \frac{A_{end} - A_1 - \sqrt{\varepsilon_r}\,(A_{end} + A_1)}{A_{end} - A_1 + \sqrt{\varepsilon_r}\,(A_{end} + A_1)} \right)$$

où $\varepsilon_r$ est une constante diélectrique relative connue du fluide (14) et $\varepsilon_{r\,min}$ est une constante diélectrique relative adoptée au minimum de la couche perturbatrice.

2. Procédé selon la revendication 1, dans lequel on impose, on calcule ou on détermine dans une mesure de calibrage la constante diélectrique relative $\varepsilon_r$ du fluide (14), la constante diélectrique relative adoptée au minimum $\varepsilon_{r\,min}$ de la couche perturbatrice et/ou l'amplitude de référence $A_{end}$.

3. Procédé selon l'une des revendications précédentes, dans lequel on détermine la vitesse de propagation moyenne $\overline{c}_1$ du signal électromagnétique dans la couche perturbatrice à partir de l'amplitude de référence $A_{end}$ et de l'amplitude $A_1$ de la seconde impulsion de mesure avec

$$\overline{c}_1 = c_0 \left( \frac{A_{end} + A_1}{A_{end} - A_1} \right)$$

et on corrige le niveau de remplissage du fluide (14) avec le temps de parcours du signal dans la couche perturbatrice, qui est retardé en correspondance par $\overline{c}_1$ par rapport à la vitesse de la lumière sous vide $c_0$.

4. Procédé selon l'une des revendications précédentes, dans lequel, pour traiter des impulsions superposées, on associe tout d'abord une amplitude $A_1$, $A_2$ à la valeur maximale de l'évolution du signal dans une fenêtre de temps, et on vérifie une valeur de l'évolution du signal, antérieure d'une moitié de la largeur d'impulsion, pour savoir si elle s'écarte significativement de zéro, et, si cela est le cas, on adopte cette valeur antérieure comme valeur d'amplitude supplémentaire $A_1$ d'une impulsion de superposition, et, si cela n'est pas le cas, on traite la valeur maximale comme unique amplitude $A_1$, $A_2$ de l'impulsion, la largeur d'impulsion étant définie auparavant.

5. Procédé selon l'une des revendications précédentes, dans lequel on réajuste les amplitudes $A_1$, $A_2$ en se basant sur une courbe caractéristique d'amplitude dépendante du niveau de remplissage.

6. Procédé selon l'une des revendications précédentes, dans lequel on mémorise préalablement une amplitude de référence de transition d'une impulsion de transition au début de la sonde et, par comparaison d'une amplitude de transition de l'évolution du signal avec l'amplitude de référence de transition, on reconnaît et/ou on compense l'influence d'une phase vapeur dans la zone supérieure du récipient (12).

7. Procédé selon l'une des revendications précédentes, dans lequel il résulte une autre impulsion de mesure par la formation d'un dépôt sur la sonde (24), et on reconnaît et/ou on compense l'influence de la formation du dépôt du fait que l'on traite le dépôt comme une couche perturbatrice apparente.

8. Capteur (10), en particulier capteur de niveau de remplissage de type TDR, comportant un émetteur (28) et un récepteur (30) pour émettre et recevoir un signal électromagnétique, en particulier un signal micro-ondes, ainsi qu'une commande (26) qui est réalisée pour déterminer le niveau de remplissage d'un fluide (14) et/ou d'une couche perturbatrice dans un récipient (12) en se basant sur le temps de parcours du signal, **caractérisé en ce que** la commande (26) est réalisée pour déterminer le niveau de remplissage par un procédé selon l'une des revendications précédentes.

Figur 1
(Stand der Technik)

Figur 2
(Stand der Technik)

Figur 3

Figur 4

EP 2 634 541 B1

Figur 5a

Figur 5b          Figur 5c

Figur 6a

Figur 6b

23

## Figur 7

## Figur 8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2365302 A1
- DE 10051151 A1
- US 6724197 B2
- US 5723979 A
- US 6445192 B1
- EP 2154495 A2
- WO 0225227 A1
- EP 2418465 A1
- EP 1191315 A2